Europäisches Patentamt

(19) European Patent Office

Office européen des brevets

(11) Publication number : **0 451 118 A2**

(12) **EUROPEAN PATENT APPLICATION**

(21) Application number : **91830122.7**

(22) Date of filing : **28.03.91**

(51) Int. Cl.⁵ : **B32B 13/04, A47B 96/20, B44C 5/04**

(30) Priority : **05.04.90 IT 343590**

(43) Date of publication of application :
**09.10.91 Bulletin 91/41**

(84) Designated Contracting States :
**BE CH DE ES FR GB LI LU NL**

(71) Applicant : **LAVAMAR S.r.l.**
**Via Santo Marino, 30**
**I-47030 Poggio Berni (Forli') (IT)**

(72) Inventor : **Zoffoli, Giuseppe**
**Via Viale, 31**
**I-47030 Poggio Berni (Forli) (IT)**

(74) Representative : **Lanzoni, Luciano**
**c/o BUGNION S.p.A. Via Cairoli, 107**
**I-47037 Rimini (Forli) (IT)**

(54) **A panel for furniture, comprising a finished sheet of gypsum.**

(57)    The panel comprises a thin outer sheet of polished gypsum and provides a multi-layer alternative to the thick soft-stone slabs used typically for table tops ; it comprises a first layer (1) of material naturally stronger and more rigid than gypsum, to which a coloured and/or patterned decoration is applied, and a second layer (2) consisting in a sheet (22) of gypsum secured firmly to the top of the first layer (1), of which the thickness (s2) is fine enough to ensure transparency and expose the decoration on the first layer (1) to view, filtered through the characteristic crystalline structure of the thin gypsum (22) ; the thicknesses (s1, s2) of the two layers (1, 2) combine to give an overall depth of the composite panel (3) that will ensure its strength and rigidity.

FIG 1

The present invention relates to a panel comprising a finished sheet of gypsum, for use in furniture manufacturing.

Gypsum, or chemically, hydrated calcium sulphate CaSO$_4$ 2H$_2$O, a mineral crystallizing prismatically in the monoclinic system, is generally colourless or whitish exhibiting a vitreous or mother-of-pearl lustre and possesses a marked transparency. It will often appear coloured with red, brown or yellow due to the presence of certain impurities. The ability of the crystal to bond along its axis of symmetry means that gypsum can be cut and split into notably thin and transparent sheets. Hardness is somewhat limited however, registering 2 on the Mohs scale. Gyspum occurs as flaky, prismatic crystals, often quite large or in lamellar aggregates typically of rosette structure (desert rose) or in compacted, spathic or saccharoidal masses (alabaster).

The properties outlined above have resulted in gypsum being cut by certain specialist companies into particularly thick slabs which, when polished with polyester or other transparent resin finishes, afford a surface of appreciable lustre and hardness and which, suitably impregnated with an appropriate colouring agent, can be worked into panels of truly impressive appearance for furniture in general, but more especially for table tops and stands.

A clear limitation on this type of production is reflected, on the one hand, in the considerable thickness that a slab of gypsum must acquire in order to possess sufficient mechanical strength and rigidity, and on the other, in the impossibility of fashioning particularly large slabs; despite being generously thick, in fact, such a slab would become especially flexible and fragile notwithstanding any treatment with transparent resins.

Neither is this type of manufacturing operation free of other drawbacks, notably a high financial outlay, which stems not only from the initial cost of purchasing and working the material itself, but also from the considerable length of time required for the process of colouring each single slab.

Moreover, the transparent resin must be applied to the entire surface area of the single slab in order to invest it with the greatest mechanical strength possible, and naturally to achieve the degree of lustre desired.

The object of the present invention is to overcome the drawbacks mentioned above.

The stated object is fully realized in a panel as characterized in the appended claims, by obviating the need for gypsum to be proportioned in massive thicknesses; instead, a single panel according to the present invention consists in at least two layers of which one is a backing layer serving to lend rigidity and strength to an overlaid sheet of gypsum generally much thinner than would be the case, naturally enough, in the event that the panel were to be of gypsum throughout.

With the addition of the backing layer, moreover, fashioned from wood, plastic or similar material, the gypsum sheet can be fabricated advantageously by using squares or rectangles of smaller area matched one with another in a close fit, thereby enabling the exploitation of offcut material to put together panels of any given size. Similarly, a more efficient use can also be made of hewn stone occurring in smaller blocks (e.g. 0.5 cubic metre), and the available resources of raw material thus widened.

It will therefore be evident that panels embodied according to the invention can acquire features of appearance at least comparable to those afforded by a slab fashioned entirely of gypsum, though at a much reduced cost, given that wood, plastics or other materials are considerably less expensive than gypsum whilst possessing the strength and rigidity necessary for the purpose in question. Furthermore, the manufacturing process can be accelerated given that there is no necessity for the gypsum to be coloured, the desired colour or decoration being applied directly to the backing layer beneath the gypsum sheet.

Finally, one advantage of the invention stems from the fact that an increased output of panels can be obtained for a given input of raw material, as the material can be cut to thicknesses notably finer than those required by prior art methods. The invention will now be described in detail, by way of example, with the aid of the accompanying drawings, in which:

fig 1 shows the perspective of a panel according to the invention in which the sheet of gypsum, seen in exploded view, consists in a plurality of matched squares or rectangles;

fig 2 shows an alternative embodiment of the panel disclosed;

fig 3 shows a further alternative embodiment of the panel disclosed;

fig 4 shows a final alternative embodiment of the panel according to the invention.

With reference to the drawings, a panel 3 according to the invention comprises a first layer 1 of which the surface uppermost is chromatically coloured or treated so as to produce a suitable decoration 4. This first layer 1 must be naturally and typically dissimilar to gypsum, that is, heterogeneous in relation to gypsum and thus possessing mechanical properties of notable strength and rigidity. 2 denotes a second layer consisting in a sheet 22 of gypsum firmly associated with the decorated surface of the first layer 1, either bonded with transparent adhesives or restrained mechanically, as will become clear in due course. The essential feature of the gypsum sheet 22 consists in its cut thickness s2, which is sufficiently fine to render the layer 2 at least partially transparent, thereby causing the colour or decoration 4 of the bottom first layer 1 to show through once the two layers are united.

Thus, the sheet of gypsum appears substantially coloured or decorated and the colouring and/or decoration takes on a particularly striking effect, given that the decoration 4 is viewed through the characteristic crystalline structure of the gypsum. As regards the ridigity and strength of the panel, this is substantially accounted for by the bottom layer 1, which in effect performs the function of a substrate for the thin sheet of gypsum 22. Needless to say, the thickness s1 of the first layer 1 will be such as to invest the composite panel 3 with a suitable combination of strength and rigidity, not least in view of the limited thickness s2 of the gypsum sheet 22.

More exactly, the first layer 1 consists in a slab or base 11 which can be of wood, plastics or other composition, and might be suitably moulded. At all events, the coloured and/or patterned decoration 4 is applied to the exposed surface and the sheet 22 then laid over the decoration and secured in place, for example by means of a transparent adhesive. The decoration 4 might be produced in any one of a variety of ways, for example with uniform or shaded colours, polychrome colouring or perhaps art work, and possibly even with a reflecting surface.

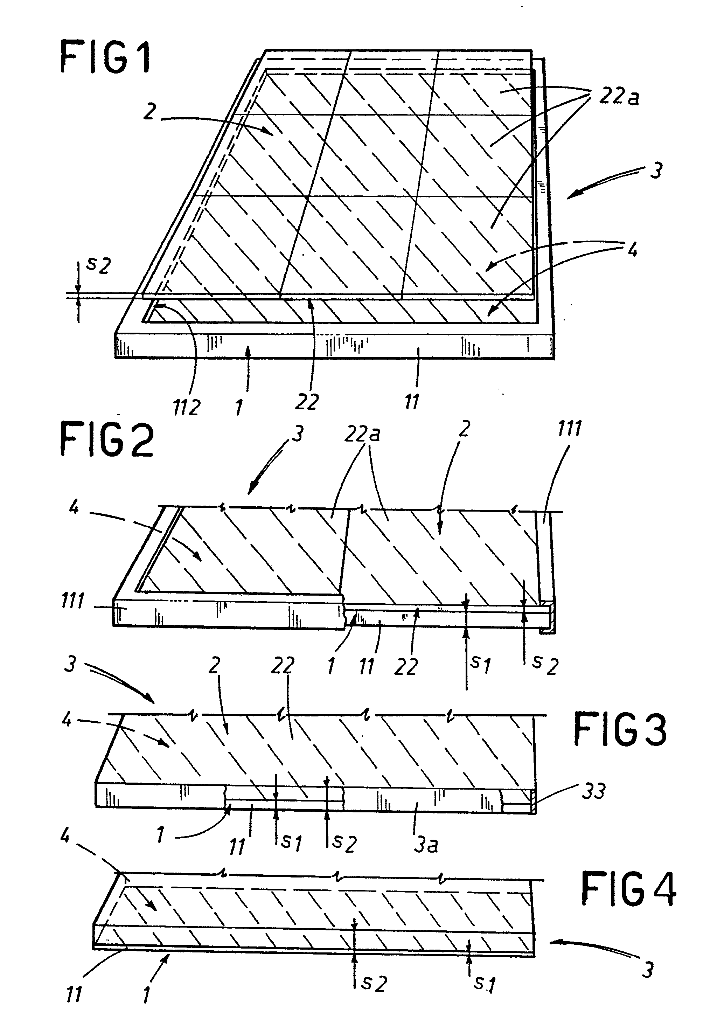

In the event that the panel is obtained through a simple pairing of two layers of identical length and breadth, the edge 3a will be banded round with a uniform layer 33 of colouring material in order to conceal the horizontal joint between the two layers as shown in fig 3. Clearly, the transparent adhesive is indispensable in this instance, as it will be likewise in the case where the base 11 may afford a simple raised edge as in fig 1, such as to create a recess 112 in which to accommodate the gypsum sheet 22; in this particular instance, the depth of the recess 112 will correspond to the thickness s2 of the sheet 22 which, to advantage, might be composed of a plurality of elements 22a matched together. Such elements could be of either identical or dissimilar dimensions, thus enabling the composition of sheets 22 from reusable offcuts, or in any event, allowing the utilization of raw material cut from particularly small hewn blocks. Naturally, the composition of one sheet 22 from several smaller elements 22a remains a possibility even in other embodiments of the panel 3. Indeed where a sheet 22 is made up of smaller elements 22a the cut thickness s2 can be much less than that which would be required for a single sheet 22 of corresponding overall surface area. The advantage of fragmenting a sheet 22 into smaller elements 22a thus becomes evident, inasmuch as the quantity of stone utilized can be much reduced from that needed to fashion a monolithic sheet of the same overall size.

Fig 2 illustrates an alternative embodiment of the panel which is bordered advantageously with a frame surround 111 tightly compressing the two layers. Fig 4 shows a further embodiment, in which it will be seen that the first layer 1 consists simply in a coating of coloured synthetic resin of which the colour provides the decoration 4 and the chemical and physical properties are such as to increase the strength and rigidity of the gypsum 22; in this instance, the top gypsum layer 2 is a slab of which the thickness s2 will be more substantial, though remaining transparent, and commensurate with the total area of the panel 3.

The further possibility exists, clearly enough, of utilizing several layers of material, given that a gypsum sheet 22 might be applied to both faces of a middle backing layer 1. It would also be possible to embody panels with more than one backing layer 1 to the end of producing panels with notable degrees of mechanical strength and rigidity. Again, there is the option of impregnating the gypsum sheet 22 itself with a colouring agent, in addition to the base decoration 4, in such a way as to widen the range of visual effects. Finally, every panel will be coated with a film of transparent resin covering at least the exposed surface of the gypsum sheet 22 in order to ensure surface hardness, strength and lustre.

The cut thicknesses of gypsum sheet 22 adopted in practice, according to the invention, range between approximately 1 mm, in the case of a panel composed from smaller elements 22a, up to 6 mm in the case of an embodiment such as that of fig 4, though no greater, as the reduction in transparency would be too great.

## Claims

1) A panel for furniture comprising a finished sheet of gypsum,
characterized
in that it comprises:
– at least one first layer (1), dissimilar to gypsum in nature and quality and possessing mechanical properties of considerable strength and rigidity, of which at least the surface is chromatically coloured or decorated;
– at least one second layer (2) consisting in a sheet (22) of gypsum firmly associated at least with the uppermost surface of the first layer (1), of which the cut thickness (s2) is sufficiently fine to render the sheet (22) at least partially transparent, thereby exposing the colour and/or decoration of the first layer (1) to external view, filtered through the characteristic crystalline structure of the overlaid sheet (2) of gypsum; and in that the thickness (s1) of the first layer (1) is such as to invest the panel (3) with suitable degrees of strength and rigidity, not least in view of the cut thickness (s2) of the gypsum sheet (22).

2) A panel as in claim 1, wherein the first layer (1) consists in a sheet of material (11) coloured or decorated on the surface and united with the sheet (22) of gypsum by means of transparent adhesives.

3) A panel as in claim 1, wherein the first layer (1) consists in a sheet (11) coloured or decorated on the surface and united with the sheet (22) of gypsum by means of a restraining frame surround (111).

4) A panel as in claim 1, wherein the first layer (1) consists in synthetic resin coloured for decorative effect and serving also to increase the strength and rigidity of an overlaid sheet (22) of gypsum of which the cut thickness (s2) is relatively great within the limits of transparency and commensurate with the overall area of the panel (3).

5) A panel as in claim 1, wherein the sheet (22) of gypsum is composed of a plurality of elements (22a) laid one beside another.

6) A panel as in claim 1, wherein the sheet (22) of gypsum is also impregnated with a colouring agent while remaining transparent.

7) A panel as in claim 2, wherein at least the outer face edge (3a) is banded by a uniform layer (33) of colouring material.

8) A panel as in claim 2, wherein the sheet (11) affords an upwardly directed recess (112) designed to accommodate the sheet (22) of gypsum.

9) A panel as in claim 5, wherein the sheet (22) composed of a plurality of elements (22a) exhibits a cut thickness (s2) significantly less than the cut thickness that would be required for a single sheet (22) of gypsum identical in area.

10) A panel as in claim 1, wherein it at least the exposed surface of the sheet (22) of gypsum is coated with a film of transparent resin.

11) A panel as in claim 1, wherein the first layer (1) is decorated with a reflecting surface.

FIG 1

FIG 2

FIG 3

FIG 4